(19) Europäisches Patentamt

European Patent Office

Office européen des brevets

(11) EP 1 277 866 A2

(12) **EUROPÄISCHE PATENTANMELDUNG**

(43) Veröffentlichungstag:
22.01.2003  Patentblatt 2003/04

(51) Int Cl.⁷: **D04H 1/50**, D04H 5/06

(21) Anmeldenummer: 02011407.0

(22) Anmeldetag: 24.05.2002

(84) Benannte Vertragsstaaten:
AT BE CH CY DE DK ES FI FR GB GR IE IT LI LU
MC NL PT SE TR
Benannte Erstreckungsstaaten:
AL LT LV MK RO SI

(30) Priorität: 16.07.2001  DE 10133772

(71) Anmelder: **Carl Freudenberg KG**
69469 Weinheim (DE)

(72) Erfinder:
• **Groitzsch, Dieter, Dr.**
69493 Hirschberg (DE)
• **Staudenmayer, Oliver, Dr.**
69469 Weinheim (DE)

(54) **Vliesstoffe mit hoher Flüssigkeitsaufnahme und dreidimensionaler regelmässiger Struktur, Verfahren zu deren Herstellung und deren Verwendung**

(57)     Beschrieben wird ein dreidimensional strukturiertes Faserflächengebilde mit hoher Flüssigkeitsaufnahme von mindestens fünf g Flüssigkeit pro g Faserflächengebilde und regelmäßig in Bezug auf die Flächenebene alternierend auftretenden Erhebungen und Vertiefungen umfassend mindestens eine Vliesstofflage und ein damit verbundenes geschrumpftes Flächengebilde. Die Verbindung zwischen Vliesstoff und dem geschrumpften Flächengebilde ist dabei durch Verschweißen erfolgt, und das Verschweißen ist zumindest senkrecht zur Richtung des stärksten Schrumpfes des geschrumpften Flächengebildes in der Form von regelmäßig angeordneten Linien erfolgt. Ferner haben sich zwischen Vliesstofflage und geschrumpftem Flächengebilde an den alternierend auftretenden Erhebungen und Vertiefungen Räume ausgebildet, welche die Flüssigkeitsaufnahme des Flächen-gebildes fördern.

Die erfindungsgemäßen Flächengebilde lassen sich insbesondere als Wischtücher, Feuchtwischtücher oder als Flüssigkeitsspender zur Reinigung oder zum Auftrag von Flüssigkeiten einsetzen.

Fig.1

EP 1 277 866 A2

**Beschreibung**

Technisches Gebiet

Die vorliegende Erfindung betrifft hochsaugfähige Vliesstoffe mit einem regelmäßigen Oberflächenmuster sowie deren Herstellung und Verwendung.

Stand der Technik

Marktübliche Wischtücher gibt es in verschiedensten Ausführungen. Gängige Typen sind Papiere oder Vliesstoffe, die oftmals als Feuchttücher eingesetzt werden oder Flüssigkeiten aufnehmen sollen. Solche Wischtücher, werden als Feuchttücher oder als flüssigkeitsaufnehmende Tücher beispielsweise in der Babypflege, im Kosmetikbereich z. B. zur Aknepflege, zur Entfernung von Schmutz im Haushalt, im Badezimmer oder zur Gebäudereinigung, zum Auftrag oder Entfernung oder Entfernung von pflegenden bzw. kosmetischen Substanzen auf die Haut, zum Auftrag bzw. Entfernung von medizinischen Substanzen oder zur Intimpflege eingesetzt. Es handelt sich um Strukturen, die für diesen Einsatzzweck üblicher-weise eine hohe Wasser- bzw. Flüssigkeitsaufnahme besitzen sollen. Neben Wasser enthalten diese Strukturen häufig verschiedenste Lotionen auf Basis von Ölen bzw. Öl / Wasser-gemischen und/oder chemische Substanzen, die neben der Faseroberfläche die Reinigung unterstützen. Da man die Produkte oft mit den Händen benützt, werden die Produkte entweder voluminös, bauschig angeboten oder werden bei der Verwendung gefaltet bzw. geknäult, damit sie bei der Handhabung einfacher und angenehmer eingesetzt werden können.

Für die Verwendung als Wischtuch sind dreidimensionale Strukturen aus WO-A- 00/108,998 und WO-A- 99/107,273 bekannt. Es sind Komposite aus mindestens ein oder zwei Vliesstoffen und extrudierten, biaxial gereckten Netzen, wie beispielsweise aus Polypropylen bekannt, die nach der Laminierung, beispielsweise durch partielle Bindung durch Druck und Temperatur durch Schrumpfung aufgeworfenen Strukturen in der dritten Dimension entwickeln uns somit voluminöser werden. Diese Aufwerfungen sind aufgrund der Schrumpfung in beiden Richtungen, dh. in Längs- und Querausrichtung der Monofilamente des gereckten PP-Netzes relativ ungleichmäßig und optisch nicht besonders ansprechend. Der Zusammenhalt der beiden Vliesstofflagen erfolgte durch das Netz hindurch durch punkt- oder musterartige Verschweißung in einem Kalander mit Druck und Temperatur.

Aus der EP-A-814,189 ist ein Vliesstoff bekannt, der aus mindestens einem unidirektional verstreckten Spunbond und einem damit mechanisch verbundenen Stapelfaservlies besteht. Der Verbund zeichnet sich durch hohes Volumen und gute_Griffigkeit aus.

Dreidimensional strukturierte Faserflächengebilde sind an sich bekannt. In der DE-A-199 00 424 werden dreidimensional strukturierte Kombinationen aus miteinander in Form eines regelmäßigen Musters thermisch verschweißten Endlos- und Stapelfaserschichten beschrieben. Die Entwicklung der dreidimensionalen Struktur erfolgt durch Verwendung von Faserschichten mit unterschiedlicher Schrumpf-fähigkeit. Durch Auslösen des Schrumpfes wird der Stapelfaserschicht eine dreidimensionale Struktur aufgeprägt. Es hat sich dabei allerdings gezeigt, dass die dabei entstehende dreidimensionale Struktur unregelmäßig ist, da die Abfolge von Erhöhungen und Vertiefungen, nach einem eher zufälligen Muster verläuft.

Beispiele für solche Verbunde sind Faserflächengebilde aus mindestens ein oder zwei Vliesstoffen und extrudierten, biaxial gereckten Netzen, wie beispielsweise aus Polypropylen (nachstehend "PP" genannt). Diese entwickeln nach der Laminierung durch Schrumpfung aufgeworfene Strukturen in der dritten Dimension. Diese Aufwerfungen sind unter anderem aufgrund der Schrumpfung in beiden Richtungen, d.h. in Längs- und Querausrichtung der Monofilamente des gereckten PP-Netzes, relativ ungleichmäßig und optisch nicht besonders ansprechend. Der Zusammenhalt der beiden Vliesstofflagen erfolgt üblicherweise durch das Netz hindurch durch punkt- oder musterartige Verschweißung in einem Kalander mit Druck und Temperatur.

Ausgehend von diesem Stand der Technik liegt dieser Erfindung die Aufgabe zugrunde, dreidimensional strukturierte Fasergebilde bereitzustellen, die eine deutlich erhöhte Flüssigkeitsaufnahme aufweisen und sich gleichzeitig durch ein regelmäßiges dreidimensionales Muster auszeichnen. Durch die Erfindung sollen also stark flüssigkeitsabsorbierende Faserstrukturen mit gleichmäßiger Struktur und großem Volumen bzw. Bausch erzeugt werden kann, d. h. durch bestimmte erfindungsgemäße Maßnahmen soll eine hohe Wasseraufnahme und gleichzeitig die Struktur der dreidimensionalen Aufwerfungen, bzw. Vertiefungen vorbestimmt werden und die Zufälligkeiten und die damit verbundene Unregelmäßigkeiten der Struktur sollen verhindert werden.

Darstellung der Erfindung

Die vorliegende Erfindung betrifft ein dreidimensional strukturiertes, voluminöses und bauschiges Faserflächengebilde mit hoher Flüssigkeitsaufnahme von mindestens 5 g Flüssigkeit pro g Faserflächengebilde, einer Dicke von mindestens 0,8 mm, vorzugsweise mindestens 1 mm, besonders bevorzugt 1 bis 5 mm und regelmäßig in Bezug auf die Flächenebene alternierend auftretenden Erhebungen und Vertiefungen umfassend mindestens eine Vliesstoffschicht und ein damit verbundenes geschrumpftes Flächengebilde, wobei die Verbindung zwischen Vliesstoffschicht und dem geschrumpften Flächengebilde durch Verschweißen erfolgt ist, wobei das Verschweißen zumindest senkrecht zur Richtung des stärksten Schrumpfes des geschrumpften Flächengebildes in der Form von regelmäßig angeordneten Linien vorzugsweise in der Form von regelmäßig angeordneten und ununterbrochenen Linien, erfolgt ist und wobei zwischen Vliesstoffschicht und geschrumpftem Flächengebilde an den alternierend auftretenden Erhebungen und Vertiefungen sich Räume ausgebildet haben, welche die Flüssigkeitsaufnahme des Flächengebildes fördern.

Der erfindungsgemäße Verbundstoff weist eine hohe relative und absolute Wasseraufnahme auf. Die hohe absolute Wasseraufnahme kann dadurch erreicht werden, dass Faserstrukturen nach dem Schrumpf in eine dreidimensionale Struktur ein höheres Flächengewicht besitzen und damit mehr Wasser aufnehmen können. Dies ist für einen Fachmann leicht verständlich. Überraschenderweise zeigen solche dreidimensional strukturierten Flächengebilde auch eine deutlich höhere prozentuale Wasseraufnahme, welche unabhängig vom eingesetzten Flächengewicht ist. Durch den Vorgang der Schrumpfung in die dritte Dimension wird eine höhere prozentuale Flüssigkeitsaufnahme erzielt und gleichzeitig eine regelmäßiges dreidimensionales und voluminöses Muster erzeugt.

In wasseradsorbierenden Strukturen werden normalerweise Viskosefasern als Haupt- oder Minderkomponente eingesetzt, um eine hohe Wasseraufnahme zu erzielen. Diese Maßnahme ist in der Fachwelt anerkannt und wird praktiziert. Mit der vorliegenden Erfindung läßt sich zeigen, dass durch die erfindungsgemäßen Maßnahmen die relative Wasseraufnahme von viskosehaltigen Produkten deutlich erhöht werden kann. Es zeigt sich sogar, dass Materialien ganz ohne Viskoseanteil ebenfalls ein sehr hohes relativ und absolutes Wasseraufnahmevermögen aufweisen. Es besteht daher die Möglichkeit, dreidimensional strukturierte Flächengebilde mit hohem Adsorptionsvermögen zu erreichen, die ohne den Einsatz von Viskosefasern auskommen. Viskosefasern sind üblicherweise höher im Preis als Fasern auf Basis Polypropylen oder Polyester und neigen bei Feuchtigkeit dazu, die Geruchsbildung zu fördern. Dies könnte durch Verwendung einer Vliesstoffstruktur ohne Viskose bzw. verwandten Polymeren verhindert werden.

Vorzugsweise enthalten die in den erfindungsgemäßen Verbundstoffen eingesetzten Vliesstoffe neben Fasern aus thermoplastischen Polymeren, wie Polyolefinen und/oder Polyestern, oder aus halbsynthetischen Fasern, wie Viskosefasern oder viscose-verwandte Fasern, wie Lyocell$^R$ oder Fasern aus nachwachsenden Rohstoffen oder Abmischungen dieser Fasern enthält.

In einer weitere bevorzugten Ausführungsform enthalten die erfindungsgemäßen Verbundstoffe Flüssigkeiten, insbesondere Wasser und/oder Öl-/Wasseremulsionen.

Der erfindungsgemäße Verbund weist mindestens einer Lage Vliesstoff und mindestens einer Lage eines weiteren Flächengebildes auf, das derart ausgestaltet ist, daß es unter Einwirkung von feuchter und/oder trockener Hitze zum Schrumpfen bzw. zur Verkleinerung seiner Fläche neigt.

Die erfindungsgemäß zum Einsatz kommenden nicht oder unter Herstellungsbedingungen nur gering schrumpfenden Vliesstoffe können aus beliebigen Fasertypen der verschiedensten Titerbereiche bestehen, beispielsweise der Titer von 0,5 bis 50 dtex. Um eine ausreichende Weichheit zu gewährleisten sind Fasertiter von weniger als 5 dtex, vorzugsweise kleiner gleich 3,5 dtex, besonders bevorzugt kleiner gleich 3,3 dtex für die Außenvlieslagen des erfindungsgemäßen Verbundes bevorzugt. Neben Homofilfasern können auch Heterofilfasern oder Gemische verschiedenster Fasertypen eingesetzt werden. Neben Spinnvliesstoffen werden vorzugsweise Stapelfaservliesstoffe, ganz besonders bevorzugt ungebundene Stapelfaservliesstoffe eingesetzt.

In einer bevorzugten Ausführungsform enthält das erfindungsgemäße dreidimensional strukturierte Faserflächengebilde drei Schichten, wobei die beiden das geschrumpfte Flächengebilde dreidimensional abdeckenden Vliesstofflagen aus Stapelfasern bestehen, und wobei die abdeckenden Vliesstofflagen gleiche oder unterschiedliche Faserorientierungen und/oder gleichen als auch unterschiedlichen Faseraufbau aufweisen können.

Typischerweise weisen die unverfestigten Vorstufen der Vliesstofflagen (Faserflore) Flächengewichte von 5 bis 100 g/m$^2$, bevorzugt 10 bis 90 g/m$^2$, auf.

Das erfindungsgemäße Faserflächengebilde weist typischerweise einen Schrumpf-bausch (wie weiter unten definiert) von mindestens 100% auf, vorzugs-weise von 150-400%.

Besonders bevorzugt kommen dreischichtige Faserverbundstoffe mit geringen Gesamtflächengewichten nach dem Verschweißen und vor dem Schrumpfen von 20 bis 100 g/m$^2$ zum Einsatz. Aus diesen Faserverbundstoffen lassen sich besonders leichtgewichtige und gleichzeitig hochsaugfähige Verbunde durch Schrumpf herstellen.

In einer bevorzugten Ausführungsform enthält das erfindungsgemäße dreidimensional strukturierte Faserflächengebilde drei Schichten, und weist Flächengewichte von 40 bis 300 g/m$^2$ auf.

Die Schrumpfung kann dabei nur in einer Vorzugsrichtung erfolgen, aber auch in beiden oder mehr als zwei Richtungen. Die Schrumpfbeträge bei mehreren Richtungen, wie in beiden Richtungen, d.h. in Maschinenlaufrichtung und im neunzig Gradwinkel zur Maschinenlaufrichtung, können gleich oder völlig unterschiedlich sein.

Zur Festlegung des Bindungsmusters zur Fixierung der unter Prozeßbedingungen nicht- oder nur geringschrumpffähigen Faserflor- oder Vliesstofflage auf das schrumpffähige Flächengebilde sollte sich deren Verhältnis in Längs- zur Querrichtung annähernd, vorzugsweise im gleichen Verhältnis wiederfinden. Wenn beispielsweise das schrumpffähige Flächengebilde ausschließlich in Längsrichtung schrumpft und also überhaupt keinen Querschrumpf aufweist, so ist das Linienmuster der Verschweißung von Vliesstoff und schrumpffähigem Flächengebilde senkrecht zur Längsrichtung zu wählen. So ist beispielsweise als Gravur-Kalanderwalze eine solche zu wählen, die Erhöhungen aufweist, die zu 100 % in Querrichtung ausgerichtet sind, d.h. sie muß zur Verschweißung durchgehende Linien aufweisen.

Das Verschweißen zwischen dem Faserflor und/oder der Vliesstofflage und dem geschrumpften bzw. schrumpffähigen Flächengebilde des erfindungsgemäßen Verbundes erfolgt vorzugsweise durch Hitze und Druck im Kalanderspalt und/oder durch Ultraschall.

Es hat sich herausgestellt, daß der Abstand dieser Linien und der lineare Schrumpfbetrag für die Ausgestaltung der Erhöhungen und Vertiefungen verant-wortlich ist; d.h. die Form der aus der Ebene herausragenden Teile des Faserflächengebildes wird durch den Verlauf der Linien des Verschweißungsmusters exakt festgelegt.

Das schrumpfende bzw. geschrumpfte Flächengebilde kann von beliebiger Natur sein. Dabei kann es sich um ein schrumpffähiges Faserflächengebilde handeln, beispielsweise um ein Gewebe, Gewirke, Netze, Gelege, parallel verlaufende Monfilamente oder Stapelfaser- oder Multifilamentgarne oder um einen Vliesstoff oder es kann sich um eine schrumpffähige Folie handeln. Das schrumpffähige Faserflächengebilde kann aus verstreckten, linear ausgerichteten und parallel zueinander orientierten Fäden oder Garnen bestehen. Die verstreckten bzw. gereckten Fäden oder Monofilamente können durch andere in einem Winkel zu den ersteren ausgerichteten verstreckten oder nicht verstreckten oder weniger verstreckten Fäden/Monofilamente bzw. Garnen bestehen. Die sich überkreuzenden Fasern, Fäden oder Monofilamente können durch Eigenbindung, beispielsweise durch mechanische Bindung oder durch Verschweißen an den Kreuzungspunkten, an die anderen gebunden sein. Die Bindung kann aber auch durch Bindemittel, wie wäßrige Dispersionen erfolgt sein.

Das erfindungsgemäß aufgebaute und zu einem Laminat verbundene dreidimensional strukturierte Faserflächengebilde kann aus einem geschrumpften Flächengebilde und zumindest einem nicht oder unter Prozeßbedingungen weniger geschrumpften Vliesstoff bestehen. Das geschrumpfte Flächengebilde kann aber auch auf beiden Seiten mit einem Vliesstoff abgedeckt sein, entweder symmetrisch oder asymmetrisch, d.h. die Gewichte beiden Vliesstofflagen können unterschiedlich oder gleich sein. Beide Vliesstofflagen können, sofern sie überhaupt zum Schrumpfen neigen, gleiche Schrumpfbeträge aufweisen oder unterschiedliche. Mindestens eine der beiden Vliesstofflagen muß aber weniger geschrumpft sein als das in der Mitte positionierte geschrumpfte Flächengebilde.

Das schrumpffähige bzw. geschrumpfte Flächengebilde des Laminates kann aus einer uniaxial- oder biaxial gereckten Folie bestehen. Die Folie kann nach den bekannten Herstellverfahren erzeugt worden sein, beispielsweise nach dem Blasverfahren, d.h. in Schlauchform gereckt worden sein. Sie kann aber auch durch Extrusion durch eine Breitschlitzdüse geformt und durch mechanisches Recken in Maschinenlaufrichtung gelängt worden sein oder quer zur Maschinenlaufrichtung durch einen Spannrahmen oder durch Passieren eines ineinandergreifenden Walzenpaares mit Rillierung in Maschinenlaufrichtung gereckt worden sein.

Das übliche Reckverhältnis der Folie liegt bei bis zu 5 : 1 in einer oder beiden Reckrichtungen. Unter Reckverhältnis wird das Längenverhältnis der Folie nach zu vor der Reckung verstanden.

Das Extrudat der Folie kann mit an sich bekannten Füllstoffen oder Strukturbildnern versehen sein, beispielsweise mit anorganischen Partikeln, wie z.B. Kreide, Talk oder Kaolin. Dadurch kann durch die Reckung in an sich bekannter Weise eine mikroporöse Struktur erzeugt werden mit dem Vorteil einer verbesserten Atmungsaktivität.

Die Folie kann aber auch vor der Reckung mit an sich bekannten Methoden perforiert worden sein, so daß sich die Perforationen nach dem Recken zu größeren Perforationen ausweiten.

Die Folie kann aber auch vor dem Recken geschlitzt worden sein, so daß insbesondere durch Reckung im 90° Winkel zu der Längenausdehnung der Schlitze dieselbe zu Perforationen ausgeweitet werden.

Die Folie kann vor der Reckung musterartig geschwächt worden sein, so daß die geschwächten Stellen beim Recken zu Perforationen aufgeweitet werden. Die musterartige Schwächung der Folie kann durch eine Kalanderwalzenpassage, d.h. durch Hitze und Druck bzw. durch Ultraschall-Behandlung erfolgen.

Die Folie kann unabhängig, ob perforiert, musterartig geschwächt oder geschlitzt, aus einer einzigen Schicht bestehen oder durch Coextrusion aus mehreren Schichten, d.h. mindestens zwei aufgebaut sein. Einer der beiden oder die beiden äußeren Schichten der coextrudierten Folie können aus niedriger schmelzenden Thermoplasten als die andere bzw. die Mittelschicht bestehen. Die Fasern der die Schrumpffolie umgebenden Vliesstofflagen können ausschließlich an der bzw. den niedriger schmelzenden Schicht(en) der coextrudierten Folie und nicht an der Mittelschicht angebunden sein.

Bei Verwendung einer Folie als schrumpffähiges bzw. geschrumpftes Flächengebilde des Laminates wird eine gewisser Festigkeitszuwachs des Laminates erzielt. Gleichzeitig verhindert die Folie die Migration der aufgebrachten Lotions von oberen Laminatlagen nach unteren Lagen, wenn das Vliesstofflaminat im Stapel abgepackt z.B. als Feuchttuch im Handel angeboten wird.

Das schrumpffähige bzw. geschrumpfte Flächengebilde des Laminates kann aus einem losen Faserflor aus 100 % schrumpfenden, d.h. stark verstreckten Fasern bestehen, der nach bekannten Vlieslegetechniken gebildet worden ist. Die Fasern können isotrop oder in einer Vorzugsrichtung, d.h. anisotrop abgelegt worden sein. Der Faserflor kann vor der Laminierung mit mindest einer nicht schrumpfenden Faservliesstoffschicht mit bekannten Methoden vorverfestigt sein, wobei deren Verfestigungsbedingungen so gesteuert werden, daß das Schrumpfvermögen nicht oder nur unwesentlich beeinflusst wird. Der aus schrumpfenden Fasern bestehende Flor kann aus gleichen oder unterschiedlichen Titern derselben Faser bestehen. Der Titer dieser Fasern liegt üblicherweise im Bereich von ca. 0,5 dtex bis ca. 50 dtex, vorzugsweise jedoch im Bereich zwischen 0,8 und 20 dtex. Die den schrumpffähigen bzw. geschrumpften Vliesstoff oder Flor aufbauenden Fasern können aus unterschiedlichsten Fasern aufgebaut sein, beispielsweise aus Homofilfasern, aber auch aus 100 % Bikomponenten-Fasern oder einem Verschnitt aus Bikomponenten-Fasern und Homofilfasern, mit der Einschränkung, daß das höher schmelzende Polymer der Bikomponenten-Faser identisch mit demjenigen der Homofilfaser ist, wie beispielsweise der Faserverschnitt PP-Homofil- mit PP/PE- Side-by-Side oder Kern-/Mantel-Bikomponentenfaser (PE = Polyethylen). Im letzteren Fall besteht die Mantelkomponente aus PE und dieses fungiert als Bindesubstanz für die Fixierung von ein bzw. zwei nichtschrumpfenden faserigen Flächengebilden auf einer bzw beiden Seiten der Schrumpffaserschicht.

Die schrumpfende bzw. geschrumpfte Flor- oder Vliesstoffschicht kann mit bekannten Methoden perforiert worden sein oder eine netzartige Struktur aufweisen.

Solche Methoden der Perforation oder Strukturbildung werden bevorzugt, die auf dem Prinzip eines musterartiges Zurseiteschiebens der Fasern beruhen. Solche nicht materialzerstörenden Verfahren sind in EP-A-919,212 und EP-A-789,793 beschrieben.

Es können auch die oben bei der Folie beschriebenen Perforationsverfahren angewendet werden.

Als schrumpfende bzw. geschrumpfte Schicht einer Kompositstruktur können auch uni- oder biaxial gereckte, extrudierte Plastiknetze verwendet werden. Der Verstreckungsgrad in beiden Richtungen kann gleich oder unterschiedlich sein.

Vorzugsweise ist jedoch zumindest eine Vorzugsrichtung stark verstreckt. Unter starkem Verstreckungs- oder Reckgrad wird ein Verstreckungsverhältnis von mindestens 3 : 1 verstanden.

Die Stärke der Fäden liegt üblicherweise bei 150 bis 2000 µm. Unter extrudierten Plastik-Netzen werden Flächengebilde mit Gitterstruktur verstanden, die dadurch gebildet wird, daß sich erste parallel angeordnete Monofilamentscharen mit zweiten ebenfalls parallel angeordneten Monofilamentscharen in einem bestimmten gleichbleibenden Winkel kreuzen und an den Kreuzungspunkten miteinander eigenverschweißt sind. Bei Plastiknetzen bestehen die beiden Monofilamentscharen im Normalfall aus demselben Polymer. Die Dicke und der Verstreckungsgrad der zwei Filamentscharen kann aber unterschiedlich sein.

Als schrumpffähige bzw. geschrumpfte Flächengebilde können auch Gelege eingesetzt werden, die sich von Plastiknetzen oder- Gittern dadurch unterscheiden, daß die sich kreuzenden Filamentscharen an ihren Kreuzungspunkten nicht durch Eigenbindung miteinander vebunden sind sondern durch eine Bindemittelapplikation, wie beispielsweise wäßrige Polymerdispersionen. In diesem Fall können die beiden parallel orientierten Monofilamentscharen aus unterschiedlichem Polymer bestehen. Gelege sind in der Regel nur dann für den Einsatz in der vorliegenden Erfindung geeignet, wenn zumindest eine der beiden Filamentscharen in gereckter Form vorliegt. Bei Gelegen können sowohl gereckte Monofilamentfäden als auch Homofilamente zum Einsatz kommen. Der Winkel der sich kreuzenden Filamentscharen kann prinzipiell beliebig sein. Der Winkel von 90° wird aus praktischen Gründen jedoch bevorzugt. Die Filamentscharen des Geleges oder Plastiknetzes sind vorzugsweise parallel, in Maschinenlaufrichtung und die zweiten Filamentscharen quer d.h. im 90° Winkel zu Maschinenlaufrichtung ausgerichtet. Der Abstand zwischen den ersten parallel in Maschinenlaufrichtung ausgerichteten Filamenten liegt üblicherweise im Bereich zwischen ca. 0,5 und ca. 20 mm, vorzugsweise zwischen 2 und 10 mm und die der zweiten parallel ausgerichteten Filamentscharen zwischen 3 und 200 mm. Die ersten Filamentscharen tragen üblicherweise zu über 50 bis zu 100%, vorzugsweise zu 70 bis 100 % und ganz besonders bevorzugt 100 % des gesamten Flächenschrumpfes bei. Im letzteren Fall entstehen exakt ausgebildete Wellungen bzw. Korrugationen.

Die zweiten Filamentscharen tragen üblicherweise zu 0 bis 50 %, vorzugsweise 0 bis 30 % und ganz besonders bevorzugt zu 0% zum Gesamtflächenschrumpf bei.

Neben den bereits beschriebenen schrumpfenden bzw. geschrumpften Flächen-gebilden können auch Gewebe und Gewirke eingesetzt werden, mit der Maßgabe, daß zumindest eine der beiden Vorzugsrichtungen. d.h. beim Gewebe die Kette oder der Schuß aus schrumpfenden bzw. geschrumpften Fasern besteht.

Der zur Schrumpfung eingesetzte Vliesstoff kann vor seiner Laminierung zu einem Komposit einem Längungsprozeß unterworfen worden sein. Vorzugsweise wird der Vliesstoff durch mechanische Kräfte in Maschinenlaufrichtung gelängt und - sofern er aus vollverstreckten Fasern besteht - dementsprechend in Querrichtung gekürzt, d.h. er erleidet einen Breitenverlust.

Solche sog. Neck-in-Stretch-Prozesse führen zu einer deutlichen Umorientierung der Faser in dem Vliesstoff in Richtung der ausgeführten Reckung. Eine solche Umorientierung kann dadurch leichter beigeführt werden, daß während des Reckprozesses Bindungen innerhalb des Vliesstoffes durch Temperaturerhöhung gelöst oder stark gelockert werden und die Umorientierung der Fasern durch Abkühlung auf Raumtemperatur konserviert wird. Solche Umorientierungen der Fasern werden dann bevorzugt, wenn zuvor ein isotroper Vliesstoff oder ein solcher mit einer nur geringen Vorzugsausrichtung der Fasern vorliegt bzw. wenn die Schrumpfung bevorzugt nur in einer Richtung und eine klare Wellung im Vliesstoff erwünscht ist.

Zur Ermittlung der Wasseraufnahme der erfindungsgemäßen Laminate, wird das sogenannte Wasserrückhaltevermögen in Anlehnung an DIN 53923 nach der Körbchenmessmethode bestimmt. Die dazugehörige Messapparatur ist in DIN 53923 näher beschrieben. Dazu wird eine ausgestanzte Vliesstoffprobe auf 1/100 g gewogen (Trockengewicht), in das dazugehörige Drahtkörbchen gelegt und mit einer Platte 10*10 cm belastet. Die Probe bleibt 30 Sekunden mit Belastung und 30 Sekunden ohne Belastung. Nach der Einwirkdauer wird die Probe mit einer Pinzette zum Abtropfen aus dem Wasser genommen und über Eck mit einer Metallklammer aufgehängt. Nach 120 Sekunden Abtropfzeit wird die Probe auf 1/100 g abgewogen (Naßgewicht).

Die absolute Wasseraufnahme errechnet sich wie folgt:

$$\text{Absolute Wasseraufnahme } [g/m^2] = (\text{Nassgewicht - Trockengewicht})* 100$$

$$[g/m^2]$$

$$\text{Relative Wasseraufnahme } [\%] = (\text{Absolute Wasseraufnahme } [g/m^2]\ /$$

$$\text{Flächengewicht } [g/m^2]) * 100\%$$

Als Maßzahl für das Volumen / den Bausch des erfindungsgemäßen Verbundes und damit dem Raumgewinn, der nach dem Schrumpf zu alternierend auftretenden Erhebungen und Vertiefungen auftritt, wird der Bausch (B) des Materials im ungeschrumpften und im geschrumpften Zustand bestimmt und der Schrumpfbausch (SB) damit bestimmt. Die Dicke des Materials wird mit einem Tastfinger mit Messuhr und einem Auflagedruck von 8 g/cm² bestimmt.

$$\text{Bausch (B)} = \quad \text{Dicke des Materials (mm) / Flächengewicht } (g/m^2)$$

$$\text{Schrumpfbausch (SB)} = [\text{Bausch nach dem Schrumpf / Bausch vor dem}$$

$$\text{Schrumpf}] * 100\ \%$$

Die Erfindung betrifft auch ein Verfahren zur Herstellung des weiter oben definierten wasseraufnehmenden dreidimensional strukturierten Faserflächengebildes umfassend die Maßnahmen:

a) Kombination von mindestens einem Faserflor und/oder Vliesstoff mit einem schrumpffähigen Flächengebilde,
b) Verschweißen zwischen dem Faserflor und/oder Vliesstoff und dem schrumpffähigen Flächengebilde in Form eines Linienmusters, vorzugsweise durch Hitze und Kalanderdruck und/oder durch Ultraschall, wobei das Linienmuster zumindest senkrecht zur Richtung des stärksten Schrumpfes des schrumpffähigen Flächengebildes verläuft,
c) Erhitzen des erhaltenen Verbundes auf eine solche Temperatur, dass der Schrumpf des schrumpffähigen Flächengebildes ausgelöst wird und sich regelmäßig in Bezug auf die Flächenebene alternierend auftretende Erhebungen und Vertiefungen ausbilden und wobei das Ausmaß des Schrumpfes so gewählt wird, dass zwischen Vliesstofflage und geschrumpftem Flächengebilde an den alternierend auftretenden Erhebungen und Vertiefungen sich Räume ausgebildet haben, welche die Flüssigkeitsaufnahme des Flächengebildes fördern und somit die Dichte des Vliesstoffes erniedrigt und dessen Volumen und Bausch erhöht wird.

Das Verschweißen von Faserflor bzw. Vliesstoff und schrumpffähigem Flächengebilde kann auf beliebige Arten erfolgen, beispielsweise durch Kalandrieren mit einem Prägekalander, dessen eine Walze ein regelmäßiges Linienmuster aufweist, oder durch Verschweißen mit Ultraschall oder mit Infrarotstrahlung, die jeweils in einem vorbestimmten Muster auf den Vliesstoff einwirken.

Der erfindungsgemäße Verbund zeichnet sich in Bezug auf sein niedriges Flächengewicht durch eine hohe Dicke, d.h. eine geringe Dichte, bei gleichzeitig hoher Wasseraufnahme aus. Die alternierend auftretenden Erhebungen und Vertiefungen schaffen Raum für die Aufnahme von niedrig viskosen bis hochviskosen Flüssigkeiten, bevorzugt Wasser oder Wasser/Öl Gemischen, von flüssigen Mehrphasensystemen, wie Emulsionen. Diese Fluids füllen die Räume zwischen den alternierend auftretenden Erhebungen und Vertiefungen vollständig oder partiell aus und bedecken auch die Oberfläche des erfindungsgemäßen Verbundes mit einer Schicht.

Der erfindungsgemäße Verbund lässt sich insbesondere auf den Gebieten der Feuchtwischtücher, beispielsweise im Bereich der Babypflege, der Kosmetik, der Hautpflege, zur Staub- bzw. Schmutzentfernung im Haushalt oder Industrie als Flüssigkeitsspender zur Reinigung oder zum Auftrag von Flüssigkeiten, z.B. von medizinischen Substanzen oder Kosmetika. Diese Verwendungen sind ebenfalls Gegenstand der vorliegenden Erfindung.

Kurzbeschreibung der Zeichnung

Die nachfolgenden Abbildungen erläutern die Erfindung näher.

| | |
|---|---|
| Figur 1 | beschreibt eine Form der Korrugationen (Hügel/Wellungen) |
| Figuren 2a, 2b, 2c | stellen Details aus der Abbildung 1 dar. |
| Figuren 3 und 4 | beschreiben die Oberfläche einer Kalanderwalze. |
| Figuren 5a, 5b | stellen den Fall eines Schrumpfes von jeweils 50% in Maschinenlaufrichtung und quer zur Maschinenlaufrichtung dar. |
| Figuren 6a und 6b | zeigen einen erfindungsgemäßen Verbund mit linearem Schrumpf quer zur Maschinenlaufrichtung |
| Figuren 7a und 7b | zeigen einen erfindungsgemäßen Verbund mit linearem Schrumpf in Maschinenlaufrichtung |
| Figuren 8a und 8b | beschreiben einen erfindungsgemäßen Verbund mit linearem Schrumpf quer und längs zur Maschinenlaufrichtung |
| Figur 9 | zeigt eine perspektivische Ansicht des in Abbildung 8b dargestellten Verbundes |

Ausführung der Erfindung

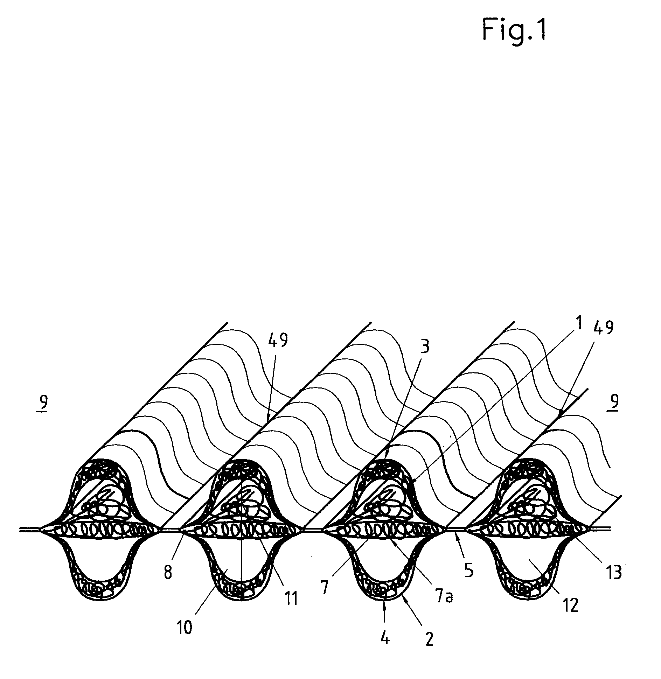

Eine der zahlreichen Varianten des erfindungsgemäßen Faserflächengebildes wird in Abb. 1 schematisch dargestellt. In diesem Fall besteht der Verbund aus insgesamt drei Vliesstofflagen.

(1) und (2) sind jeweils ungeschrumpfte Faserflor- bzw. Vliesstoffschichten, die mithilfe von Druck und Temperatur oder durch Ultraschallverschweißung in Form von ununterbrochener Linien auf den in der Mitte des Verbundes positionierten Faserflor eines dritten Vliesstoffes (7) vor der Schrumpfbehandlung aufgeschweißt worden sind. Die drei Faserflor- bzw. Vliesstoffschichten sind an den stegartigen bzw. linienförmigen, parallel zueinander ausgerichteten Verschweißstellen (5) innig miteinander verbunden.

In dem in Abbildung 1 beschriebenen Verbund sind sowohl die Fasermischungen als auch Flächengewichte der beiden Vliesstoffschichten (1) und (2) identisch, so daß nach dem Schrumpf der Vliesstoffschicht (7) eine in Querschnitt genau spiegelbildliche Doppelwelle entsteht mit gleicher Wellenhöhe (10) und (11). Unter Wellenhöhe wird der maximale Abstand der Welle von dem Zentrum des Verbundes verstanden. Im Bereich der Scheitel (3) und (4) der spiegelbildlichen Wellungen sind die Fasern der Vliesstofflagen (1) und (2) am schwächsten verdichtet. Die Verdichtung nimmt vom Scheitel (3) bzw. (4) zur Stelle der Verschweißung (5) immer stärker zu und erreicht dort sein absolutes Maximum. Die geschrumpfte Vliesstofflage (7) ist in der Mitte (7a) zwischen den stegartigen Verschweißungen (5) am schwächsten und innerhalb der Verschweißungen (5) am stärksten gebunden.

Selbstverständlich können die Faserflor bzw. Vliesstoffschichten (1) und (2) auch unterschiedlich aufgebaut sein und unterschiedliche Flächengewichte aufweisen. Die Schrumpfung im Falle der Abbildung 1 erfolgte ausschließlich in Richtung entlang der Linie 9 --- 9, wobei diese Richtung mit der Maschinenlaufrichtung (Längsrichtung) identisch ist. Durch die wellenförmigen Aufwerfungen der Vliesstofflagen (1) und (2) entstehen spiegelbildlich angeordnete Hohlräume (12) und (13).

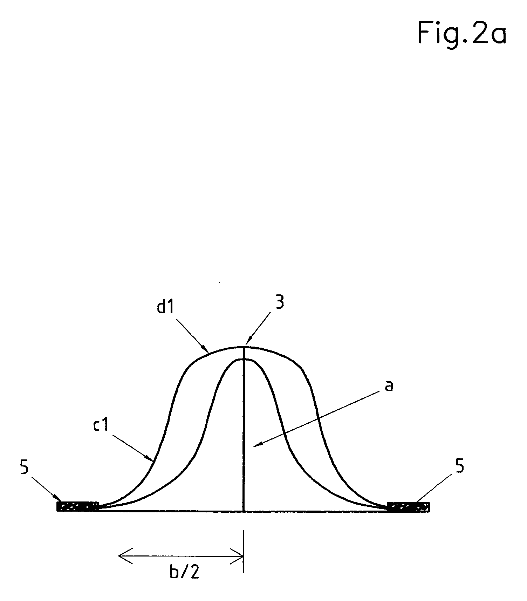

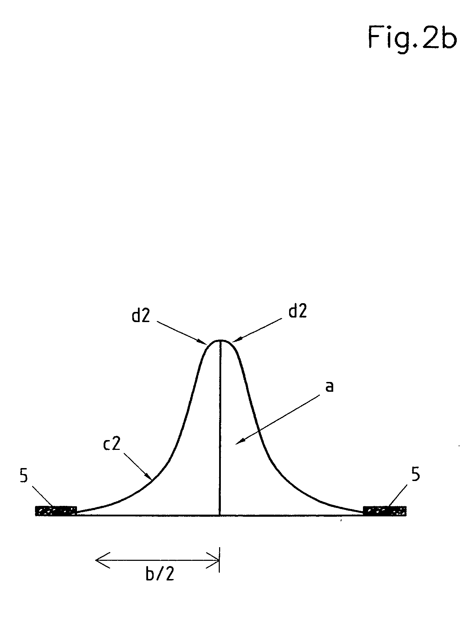

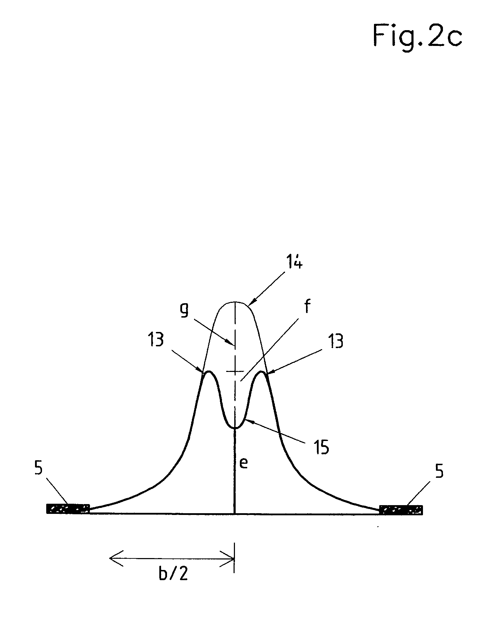

In den Abbildungen 2a, 2b und 2c ist die obere Hälfte der spiegelbildlichen Wellung im Querschnitt, d.h. entlang der Linie 9 ----- 9 dargestellt. Die Wellung erstreckt sich, wie in Abbildung 2a dargestellt, von einer Verschweißstelle (5) über den Scheitel (3) zu der zweiten Verschweißstelle (5). Der Wendepunkt der Wellung (c1) und der zweite Wendepunkt (d1) und damit die "Bauchigkeit" der Wellung hängen stark ab von der Drapierfähigkeit bzw. Verformbarkeit des Vliesstoffes (1) (und (2)). In Abbildung 2a ist ein Vliesstoff mit höherer Steifigkeit (geringerer Drapierfähigkeit) als in Abbildung 2b dargestellt. Bei sehr leichten Vliesstoffgewichten mit sehr schwacher Bindung innerhalb der Vliesstoffschicht bzw. vorzugsweise nur punktueller Bindung kann der Fall eintreten, daß sich der Gipfel (14) der Wellung wegen zu geringer Steifigkeit in sich zusammenfällt, wie dies in Abbildung 2c dargestellt ist. Es bilden sich dadurch zwei neue Gipfel (13) aus, die im Idealfall symmetrisch zur Mittelachse g angeordnet und von gleicher Gestalt sind.

Das Verhältnis a/0,5b der Höhe a der Wellung zum halben Abstand b/2 zwischen zwei benachbarten Verschweißlinien (5) und die Drapierfähigkeit der beiden Vliesstofflagen (1) und (2) bestimmen im wesentlichen die Gestalt der Wellung. Die Höhe a im Verhältnis zu b/2 ist bestimmt durch das Verhältnis den Abstand der Verschweißungsbereiche (5) vor und nach der Schrumpfung. Je höher dieses Verhältnis (b vor) zu (b nach) ist desto größer wird das Verhältnis a/0,5(b nach). Der Flächenanteil im Verbund, der durch Wellungen bzw. Hügel abgedeckt ist, im Verhältnis zur Gesamtfläche nach dem Schrumpf hängt ebenso von dem Flächenanteil der nicht an (7) gebunden Flächen vor dem Schrumpf, d.h. nach der Verfestigung zu einem Verbund, und dem Maße der Flächenverminderung durch Schrumpf ab. Die Anzahl der Wellungen bzw. Hügel pro m$^2$ wird ebenso von der Höhe des Flächenschrumpfes bestimmt. Die Größe der Wellungen bzw. der Abstand b nach dem Schrumpf bzw. der Hügel sind ebenfalls bestimmt durch die Größe der nicht durch der Verschweißungsbereiche (5) gebunden Flächen und dem Verhältnis der Flächen nach und vor dem Schrumpf.

Die Form der Erhebungen bzw. Aufwölbungen im geschrumpften Verbund bzw. deren Verformungen nach dem Schrumpf hängt von der Form der nicht mit der Mittelschicht (7) an den Schweiß- bzw. Bindungsflächen (5) verbunden Flächen, dem Gesamtflächenschrumpf und dem Verhältnis des Schrumpfes in Maschinenlaufrichtung und quer zur Maschinenlaufrichtung ab. Im Falle von parallel in Maschinenlaufrichtung ( bzw. allgemein in einer Vorzugsrichtung) in den Verbund eingebundene stark verstreckte Mono- oder Multifilamente tritt ein sogenannter linearer Schrumpf ein, worunter wir den Schrumpf in ausschließlich dieser Vorzugsrichtung verstehen.

In den diversen Ausgestaltungen der Erfindung sind die Fasern oder Anteile der Fasermischung der nicht schrumpfenden Vliesstoffaußenlagen des 3-schichtigen Komposites auf die schrumpfenden Zentrallage mehr oder weniger abzustimmen. Die Weichheit bzw. Starrheit dieser 3D(=dreidimensional)-strukturierten Außenlagen kann durch Wahl der verwendeten Fasern in weiten Grenzen verändert werden. Die Ausgestaltung dieser 3D-Vliesstoffschichten hängt weitgehend von den geforderten Eigenschaften bzw. der sie fordernden Anwendungen ab.

Für die Ausgestaltung der beiden zu 3D-Strukturen verformten Außenschichten des Verbundes und deren Strukturintegrität ist es von wesentlicher Bedeutung, ob die schrumpfauslösende Mittelschicht von poröser oder dichter bzw. undurchlässiger Struktur ist, d.h. ob sie aus Fasern, Netzen, Gelegen oder undurchlässigen Folien besteht.

Bei dem Einsatz von Folien wird die Trennkraft zwischen den 3D-Vliesstoffschichten und der Folie ausschließlich durch die Güte der Bindung zwischen Fasern und Folie an der Grenzfläche zur Folie festgelegt. Die Folie wirkt als Trennschicht für die obere und unter 3D-Vliesstofflage. Zur Erreichung ausreichender Trennkräfte / Verbundkräfte zwischen Folie und 3D-Vliesstofflage ist es vorteilhaft, wenn Folie und Fasern (zumindest ein Anteil einer Fasermischung) miteinander haftungsverträglich sind. Dies wird bekanntermaßen dadurch erreicht, daß Folie und Faser bzw. ein Faserbestandteil von Biko-Fasern bzw. Faseranteile der Fasermischung aus chemisch ähnlich oder gleich aufgebauten Polymeren bestehen. Wird als schrumpfauslösende Folie beispielsweise eine durch das Blasverfahren biaxial gereckte PP-Folie (PPO-Folie) verwendet, so ist im Sinne einer guten Haftung vorteilhaft, wenn zumindest hohe prozentuale Anteile (von mindestens 20-30 Gew.%) der zur 3D-Struktur verformten Vliesstofflage ebenfalls aus Polyolefinoder Polyolefincopolymer-Homofilfaser besteht bzw. bei Verwendung von Bikomponent-fasern die bindenden, tieferschmelzende Komponente aus Polyolefin besteht.

Beispiele für solche auf PP-Film gut haftende Fasern sind Fasern aus PP, PP-Copolymer, PE oder PE-Copolymer bzw. Bikomponentenfasern, deren Kern beispielsweise aus Polyester und deren Mantel aus PP, PE oder Copolymeren derselben bestehen. Das als Klebekomponente fungierende Faserpolymer kann ebenfalls mit einem Takkyfier = Klebrigkeitsmacher oder Weichmacher versetzt worden sein. Für eine zerstörungsfreie oder nicht schädigende Wirkung während der Verschweißung mit Ultraschall bzw. Hitze und Druck des oder der Faserflore auf die Folie sollte der Schmelz- oder thermoplastische Erweichungspunkt der niedriger schmelzenden Faserkomponten nicht höher als derjenige der gereckten Folie sein oder vorzugsweise mindestens 5 bis 10°C unter dem der Folie sein.

Eine weitere Möglichkeit die Folie bzw. den Kern der Folie vor mechanischer Zerstörung oder Schwächung zu schützen besteht in dem Einsatz einer sogenannten beidseitig oder einseitig coextrudierten, gereckte Folie. Darunter wird im Rahmen dieser Beschreibung eine 2- bis 3-lagige Folie verstanden, deren Kern aus einem thermisch beständigeren Polymer besteht als dem Polymer, das die eine oder die beiden Außenlagen bildet. Als Beispiele hierfür seien eine 3-schichtige, gereckte Folie mit PPO als Kern und zwei (im Gewicht meist leichteren) Außenschichten aus Polyethylen, Polyolefincopolymeren oder EVA (Copolymer aus Ethylen und Vinylacetat) genannt.

Werden erfindungsgemäß gereckte Netze oder Gelege als schrumpfauslösende Schicht eingesetzt, so spielt die Abstimmung der Polmerzusammensetzung der Faser des zur 3D-Struktur verformten Vliesstoffes zu der schrumpfenden Mittelschicht zum Zwecke der Vliesstoff/Netzhaftung eine weitaus geringere bis überhaupt keine Rolle. Die Flächenbedeckung durch die orientierten Monofilamente in Längs- und Querrichtung in einem Gelege/Netz ist vernachlässigbar klein im Verhältnis zur Gesamtfläche. Die Bindung der beiden Vliesstofflagen ober- und unterhalb des Geleges/Netzes erfolgt im wesentlichen durch die offenen, nicht filamentbedeckten Flächen hindurch. Die Haftung der Fasern auf den Monofilamenten des Netzes/Geleges sind beinahe unbedeutend. Für eine ausreichende Verbundhaftung ist es vorteilhaft, wenn die obere 3D-Vliesstofflage aus gleich oder chemisch ähnlichen, d.h. kompatiblen Bindefasern aufgebaut sind, wie die das Gelege/Netz bildenden Fasern, wobei deren Anteil in beiden Vliesstofflagen gleich oder unterschiedlich sein kann.

Das gereckte Netz kann wie die Folie coextrudiert worden sein, wobei aus oben genannten Gründen die Verwendung eines coextrudierten Netzes keinen deutlichen Beitrag zur Verbundhaftung beiträgt.

Es hat sich als vorteilhaft erwiesen, die Herstellung des 2- bzw. 3-lagigen Verbundes und deren Schrumpfung zu 3D-strukturierten Verbunden in getrennten Schritten vorzunehmen. Es ist außerdem vorteilhaft, die zur Verbundhaftung zur Strukturintegritätsverbesserung führenden Bindefasern so auszuwählen, daß deren Erweichungs- bzw. Hotmeltklebe-Bereich ca. mindestens 10°C, vorzugsweise mind. 15°C unterhalb desjenigen der schrumpfauslösenden Schicht liegt. Die erfindungsgemäße Erzeugung von 3D-Strukturen durch Schrumpf erwies sich als vorteilhaft für die Prozeßsteuerung, die Gleichmäßigkeit des Flächenschrumpfes und die Ausbildung der Güte der 3D-Struktur durch zwei getrennte Schritte. Eine Zusammenlegung der beiden Verfahrensschritte im Falle einer Laminierung durch Hitze und Druck ist zwar prinzipiell im Kalanderspalt bzw. durch Umschlingung einer beheizten Kalanderwalze zum Zwecke der Erhöhung der Verweildauer der Ware möglich, aber weniger empfohlen, weil dieses mit einer drastischen Herabsetzung der Produktionsgeschwindigkeit verbunden ist.

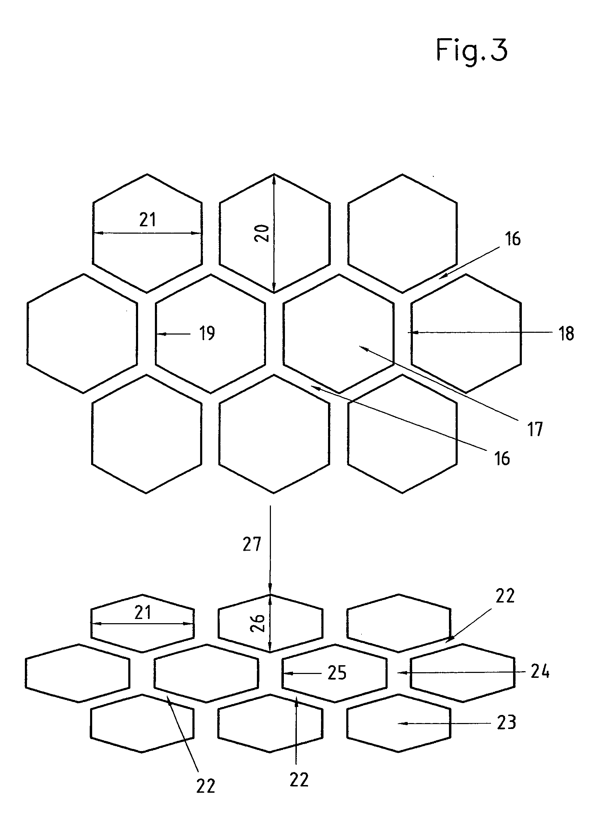

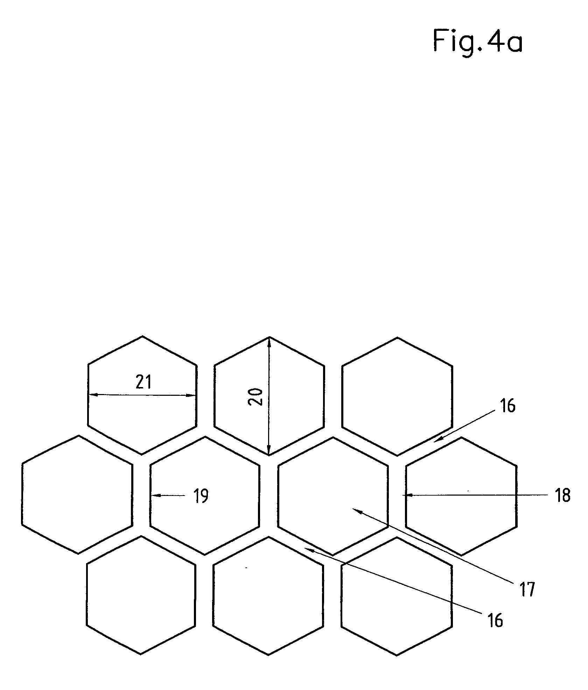

In Abbildung 3a ist die Oberfläche einer Kalanderwalze mit Vertiefungen in Form eines gleichseitigen Hexagons in Aufsicht wiedergegeben. Das gleichseitige Hexagon ist prinzipiell bereits durch deren Fläche (17) und Kantenlänge (19) genau definiert. In der Abbildung 3a ist darüber hinaus noch die Länge (20) von der oberen zur unteren Spitze, d.h. in Maschinenlaufrichtung (27) und die Breite quer zur Maschinenlaufrichtung des Hexagons zur weiteren Definition des Hexagons angegeben. Die beiden kürzesten Abstände (16) und (18) zwischen den gleichseitigen Hexagons sind identisch und geben den Rahmen der Hexagons und damit die ununterbrochen Verschweißlinien bzw. Verschweißmuster mit Honigwabenstruktur in dem ungeschrumpften, durch Hitze und Druck bzw. durch Ultrasschall verschweißten Verbund wieder.

In Abbildung 3b ist der Fall eines ausschließlich in Maschinenlaufrichtung (27) geschrumpften Verbunds mit einem Linearschrumpf von 50% wiedergegeben. Ein solcher Schrumpf tritt beispielsweise auf, wenn als schrumpfenden Flächengebilde ein extrudiertes Netz eingesetzt wird, das nur in Maschinenlaufrichtung gereckt worden ist.

Durch diesen 50%igen Schrumpf in nur einer Vorzugsrichtung (beispielsweise Maschinenlaufrichtung) verkürzt sich in dem Verbund der Abstand (20) um die Hälfte auf den Abstand (26) und die Kantenlänge (19) ebenfalls um die Hälfte auf die Kantenlänge (25), während der Abstand (21) vor und nach dem Schrumpf unverändert bleibt. Die Fläche (17) des gleichseitigen Hexagons verkleinert sich auf die Fläche (23) und aus dem gleichseitigen Hexagon vor dem Schrumpf resultiert ein in Maschinenlaufrichtung um 50% gestauchtes ungleichseitiges Hexagon. Daraus ergeben sich aus den gleichen Abständen (16) und (18) nunmehr nach dem Schrumpf die ungleichen Abstände (22) und (24), wobei (24) > (22) ist.

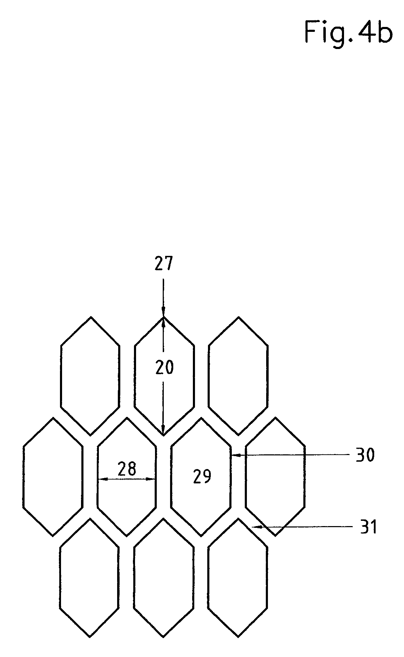

In Abbildung 4a ist die gleiche Oberfläche einer Kalanderwalze wie in Abbildung 3a dargestellt.

In Abbildung 4b ist der Fall eines ausschließlich quer zur Maschinenlaufrichtung (27) geschrumpften Verbunds mit einem Linearschrumpf von 50% wiedergegeben. Ein solcher Schrumpf tritt beispielsweise auf, wenn als schrumpfenden Flächengebilde ein extrudiertes Netz eingesetzt wird, das nur senkrecht zur Maschinenlaufrichtung gereckt worden ist.

Durch diesen 50%igen Schrumpf in nur einer Vorzugsrichtung verkürzt sich in dem Verbund der Abstand (21) um die Hälfte auf den Abstand (28), während der Abstand (20) vor und nach dem Schrumpf unverändert bleibt. Die Fläche (17) des gleichseitigen Hexagons verkleinert sich auf die Fläche (29) und aus dem gleichseitigen Hexagon vor dem Schrumpf resultiert ein senkrecht zur Maschinenlaufrichtung um 50% gestauchtes ungleichseitiges Hexagon. Daraus ergeben sich aus den gleichen Abständen (16) und (18) nunmehr nach dem Schrumpf die ungleichen Abstände (30) und (31), wobei (31) > (30) ist.

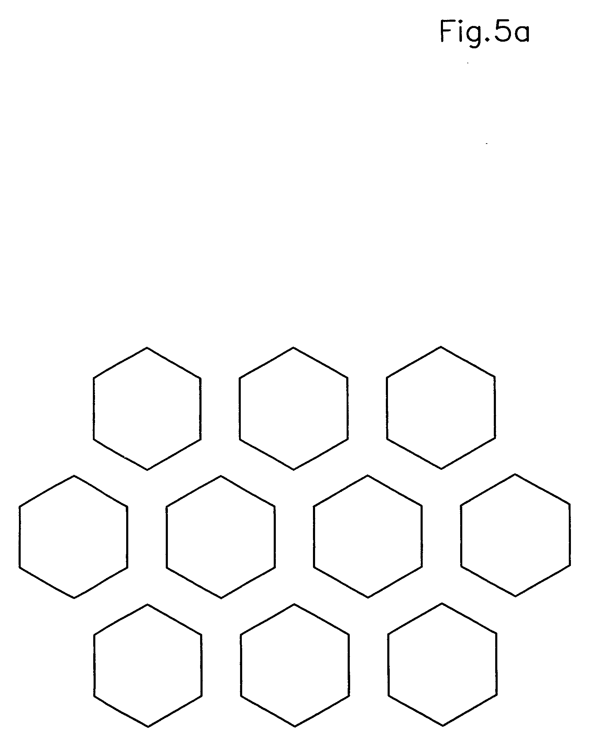

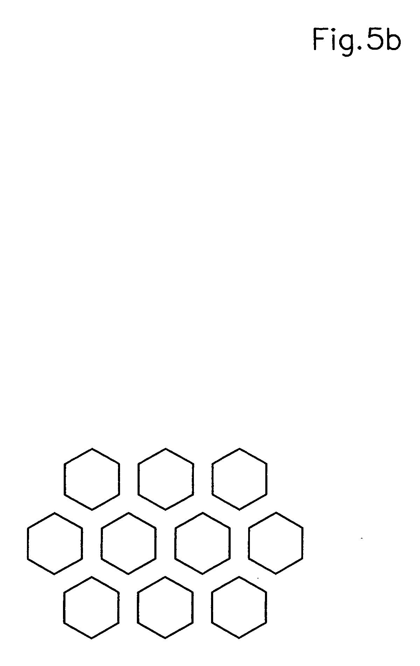

In den Abbildungen 5a und 5b ist der Fall eines Schrumpfes von jeweils 50% in Maschinenlaufrichtung und quer zur Maschinenlaufrichtung dargestellt. Der Gesamtschrumpf beträgt 75 %. In diesem Fall verkleinern sich die gleichschenkligen Hexagons entsprechend und bleiben gleichschenklig. Die kürzesten Abstände zwischen den Schenkeln verkürzen sich um 50%.

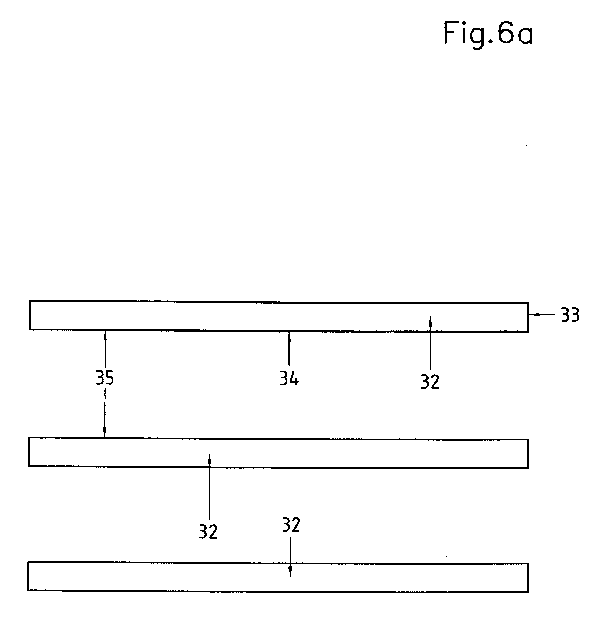

In Abbildung 6a ist die stark vergrößerte Draufsicht eines Verbundes vor der Schrumpfbehandlung wiedergegeben. Der Verbund ist über die gesamte Warenbreite (34) mit parallel zueinander angeordneten Linien oder Balken der Dicke (33), der Balkenfläche (32) und des Balkenabstands (35) durch Hitze und Druck bzw. durch Ultraschall gebunden. Diese Prägebindung wird im Rahmen der vorliegenden Beschreibung als LS (Linear Seal) bezeichnet.

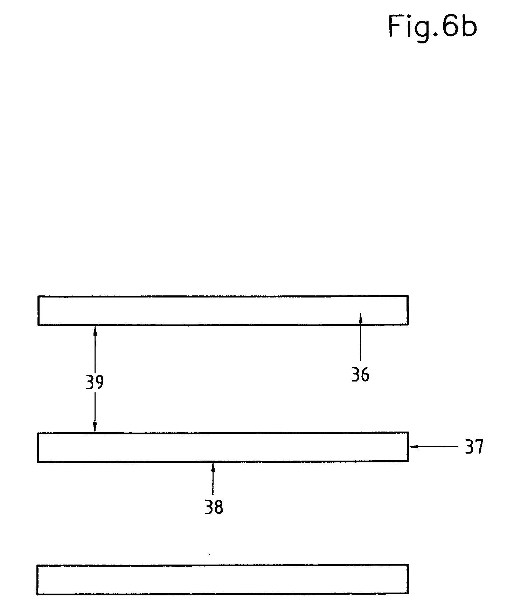

Der in Abbildung 6b wiedergegebene Zustand entsteht nach einem ausschließlich quer zur Maschinenlaufrichtung ("MLR") erfolgten Schrumpf von ca. 25% . Die Warenbreite (34) in Abbildung 6a verkürzt sich also um 25% auf die Warenbreite (38) in Abbildung 6b. Dadurch, daß in MLR kein Schrumpf erfolgt, bleibt die Dicke der Balken unverändert, d.h. (33) entspricht (37) und der Abstand derselben zueinander bleibt ebenfalls konstant, d.h. (35) entspricht (39).

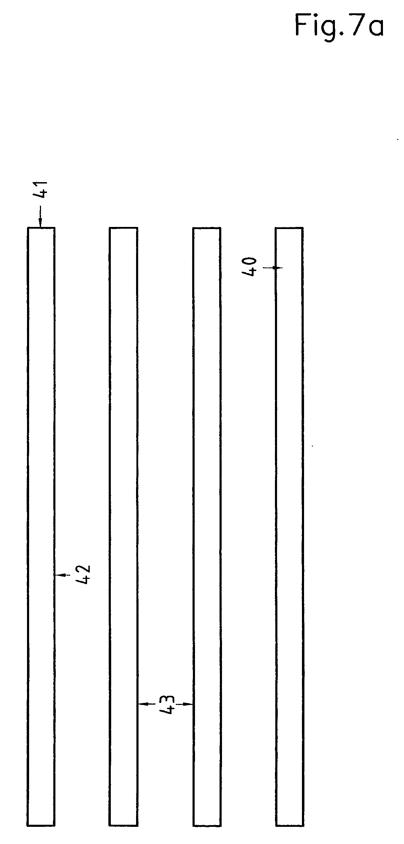

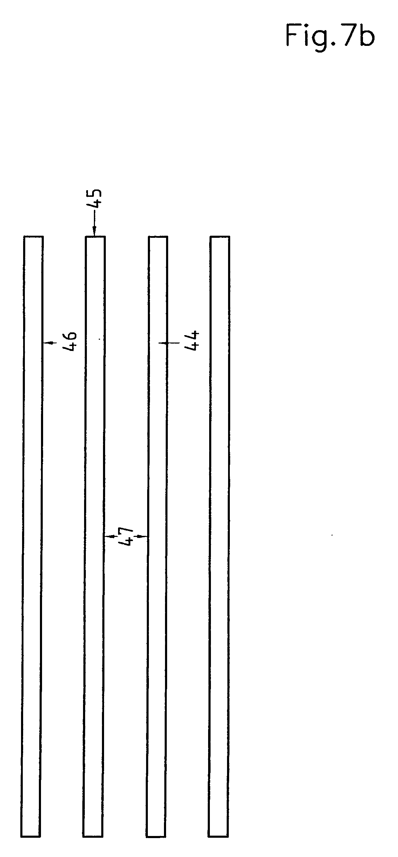

In den Abbildungen 7a und 7b ist ebenfalls wieder die stark vergrößerte Draufsicht eines LS-gebundenen Verbundes vor und nach Schrumpf dargestellt. In diesem Fall ist ein Schrumpf von 23% ausschließlich in MLR (48) erfolgt. Die Warenbreite bleibt dementsprechend unverändert (unter der Annahme, daß keine Verzüge auftreten) und damit auch die Länge der Balken, d.h. (42) entspricht (46). Die Fläche (40) der Balken vor dem Schrumpf reduziert sich um 23 % auf die Fläche (44) und ebenso der Abstand (43) der Balken vor dem Schrumpf um 23 % auf den Abstand (47) nach dem Schrumpf und dementsprechend auch Balkenbreite (41) vor dem Schrumpf auf die Balkenbreiten (45) nach dem Schrumpf.

Der in Abb. 7b in der Draufsicht dargestellte 3-lagige Verbund mit ausschließlich linearem Schrumpf in der MLR ergibt eine perspektivische Ansicht wie in Abbildung 1 dargestellt mit klar ausgebildeten Wellen, wobei die Höhe (11) der Wellen an deren Scheitelpunkt (3) entlang der Linie (49) über die gesamte Warenbreite konstant ist.

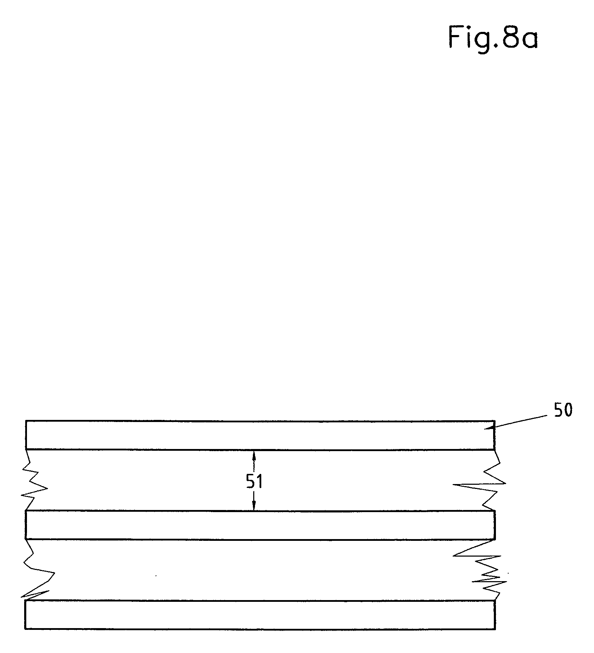

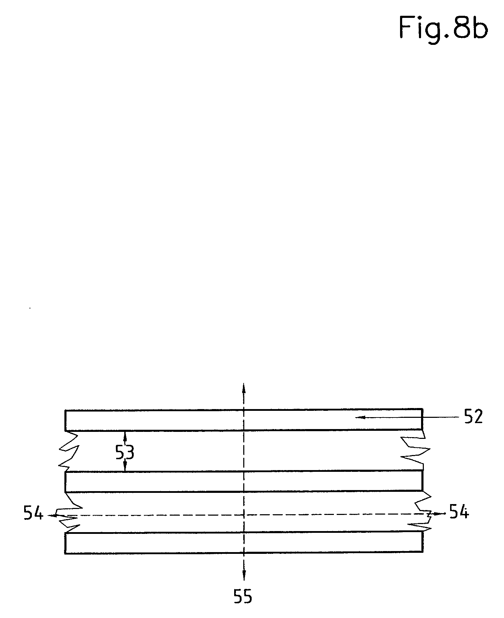

Der Fall eines Schrumpfes an einem dreilagigen Verbund, wie z.B. aus Vliesstoff/Schrumpffolie/Vliesstoff ist in den Abbildungen 8a und 8b wiedergegeben, d.h. sowohl die Balkenbindefläche (52) als auch der Balkenabstand (53) verkleinern sich entsprechend des Schrumpfes in quer zur MLR und in MLR nach dem Schrumpf auf (54) bzw. auf (55).

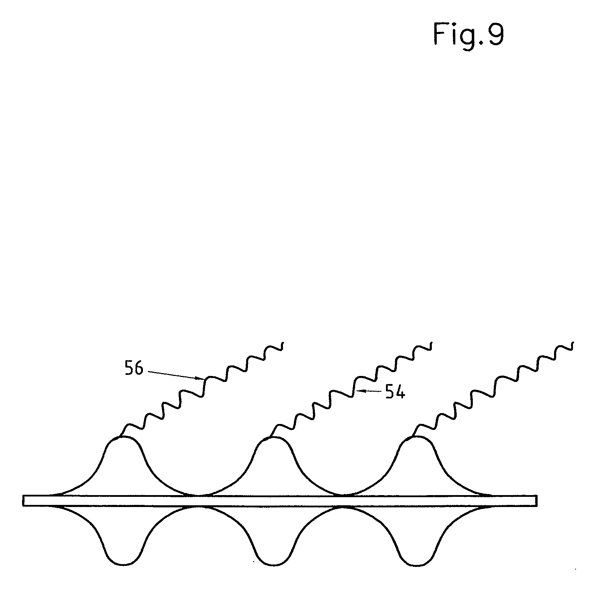

In Abbildung 9 ist die perspektivische Ansicht des in Abb. 8b dargestellten Verbundes wiedergegeben, wobei der Querschnitt der perspektivischen Ansicht entlang der Linie 55 und der Zustand entlang der Linie 54 dargestellt ist.

Man kann dabei erkennen, daß die Höhe der Wellungen entlang der Linie 54 über die gesamte Warenbreite nicht immer gleich ist sondern durch den Querschrumpf selbst auch wieder einer Mikrowellung (56) enthält.

Die nachstehenden Beispiele erläutern die Erfindung ohne diese zu begrenzen.

Beispiel 1:

Es wurden zur Florlegung eine Krempel mit Querleger (bezeichnet mit K1), eine Krempel über dem Faserablegeband (bezeichnet mit K2) mit Ablegung der Stapelfasern in Maschinenlaufrichtung und wieder eine Krempel mit Querleger (bezeichnet mit K3) verwendet. Dadurch konnte der gewünschte dreischichtige Kompositaufbau des Vliesstoffes realisiert werden. Die mit K1, K2 und K3 abgelegten Faserflorschichten werden mit F1, F2 bzw. F3 gekennzeichnet.

Sowohl die Faserzusammensetzung, die Faserorientierung als auch die Faserflor-gewichte von F1 und F3 waren identisch. Details des Aufbaus der Flächengewichte und der Fasertypen können der Tabelle 1 entnommen werden (Beispiele 1a, 1b). Das aus den drei Floren F1, F2 und F3 aufgebaute dreilagige Komposit wurde durch Passage zweier Stahlpresswalzen, die auf eine Temperatur von 80°C aufgeheizt waren, leicht verdichtet, bevor des dem Kalanderwalzenpaar zugeführt wurde.

Das Kalanderwalzenpaar bestand aus einer glatten und einer gravierten Stahlwalze. Die gravierte Stahlwalze wies parallel zueinander quer zur Maschinenlaufrichtung orientierte gerade Linien oder Streifen auf mit einer Stegbreite von 1 mm. Die Verschweißfläche betrug 25 %. Die Erhöhungen der Streifen waren konusförmig. Die Gravurtiefe betrug 0,9 mm. Der Abstand der parallelen Streifen, gemessen jeweils von Mitte zu Mitte betrug 4,0 mm.

Beide Walzen waren auf eine Temperatur von 130°C aufgeheizt. Der Linienpreßdruck betrug 65 N/mm. Aufgrund des symmetrischen Aufbaues des dreilagigen Komposites, d.h. aufgrund der Tatsache, daß F1 mit F3 identisch war, spielte es keine Rolle, welche der beiden bei Passage des Kalanders Kontakt zur gravierten Walze hatte.

Die auf diese Weise durch Hitze und Druck verfestigte Ware wurde thermisch behandelt. Nach dem Schrumpfen der mittleren Faserschicht F2 des dreilagigen Vliesstoffkomposites im einem Ofen bei 160°C über 90 Sekunden entstanden die in Abb. 1 wiedergegebenen, beidseitig in die dritte Dimension ausgerichteten Wellungen. Trotz des völlig symmetrischen Aufbaues des Komposites aus F1, F2 und F3 waren die Scheitelpunkte der Wellungen auf der Seite der Gravurwalze geringfügig höher als diejenigen, die bei der Kalandrierung der glatten Stahlwalze zugewandt waren. Diese Unterschiede in der Scheitelhöhe beidseitig der geschrumpften Faserschicht F2 erwiesen sich als umso geringer, je höher die Gravurtiefe war.

In Tabelle 1 sind die Meßergebnisse der an Beispiel 1 durchgeführten Prüfungen sowie der Schrumpf in längs und quer zur Ware und in der Fläche aufgelistet. Gemessen wurde das Flächengewicht, die absolute und relative Wasseraufnahme nach dem Körbchentest in Anlehnung an DIN 53923, jeweils vor und nach dem Schrumpfvorgang, sowie der Schrumpfbausch (SB) und die Dicke des Materials.

Tabelle 1:

|  | Beispiel Ia | Beispiel Ib |
|---|---|---|
| Faserflor F1 dtex 1,4, | 65% Viskose dtex 1,4 | 80% Viskose |
|  | Schnittlänge 40mm, | Schnittlänge 40mm, |
|  | 35% Polypropylen / | 20%Polypropylen/Poly- |
|  | Copolypropylen Homo- | ethylen-Bikomponeten-4.8, |
|  | komponentenfaser dtex 2,2 | faser dtex 1,7 |
|  | mm, |  |
|  | Schnittlänge 51 mm | Schnittlänge 51 mm |
| Faserflor F2 Polypropylenfaser dtex 90 mm | 100% Polypropylenfaser dtex 6.7, Schnittlänge 90 mm | 100% 6.7, Schnittlänge mm |
| Faserflor F3 dtex 1,4, | 65% Viskose dtex 1,4, | 80% Viskose |
|  | Schnittlänge 40mm, | Schnittlänge 40mm, |
|  | 35% Polypropylen/Copolypropyl- Bikomponenten- en-Homokomponentenfaser 1.7mm, | 20%Polypropylen/Poly- ethylen faser dtex |
|  | dtex 2,2, Schnittlänge 51 mm | Schnittlänge 51 mm |
| Gewicht vor dem Schrumpf | 38 g/m$^2$ | 55 g/m$^2$ |
| Gewicht nach dem Schrumpf | 90 g/m$^2$ | 124 g/m$^2$ |
| absolute Wasser- | 340 g/m$^2$ | 810 g/m$^2$ |

| | | |
|---|---|---|
| aufnahme vor dem Schrumpf | | |
| Absolute Wasser-Aufnanme nach dem Schrumpf | 980 g/m$^2$ | 1254 g/m$^2$ |
| relative Wasserauf-nahme vor dem Schrumpf | 895 % | 810 % |
| relative Wasserauf-nahme nach dem Schrumpf | 1090 % | 1254 % |
| Schrumpfbausch (SB) | 208 % | 175 % |
| Dicke nach dem Schrumpf (mm) | 2,2 | 1,5 |

Beispiel 2:

Für die Fertigung des in Beispiel 3 beschriebenen Komposites benötigte man zwei Krempeln, die in Maschinenlaufrichtung (md) die Faserschicht F1 und eine zweite Krempel die den Faserflor F3 ablegte. Beide Faserflore waren im Beispiel gleich aufgebaut. Zwischen beide Flore wurde ein in ausschließlich in md voll gerecktes PP-Netz mit einer Maschenweite von 3,3 * 8,5 mm und einem Flächengewicht von ca. 30 g/m$^2$ eingeführt. Die drei Lagen bzw. Schichten S1, S2 und S3 wurden wie in Beispiel 1 nach einer warmen Vorpressung zum Zwecke der Verdichtung dem Kalander-Nip, bestehend aus den in Beispiel 1 bereits genannten Walzen, zugeführt. Die Kalandrierung erfolgte bei einem Liniendruck von 65 N/mm. Anschließend wurde die Probe ohne Verzug 30 Sekunden lang im Trockenschrank mit einer Temperatur von 150°C belassen. In Tabelle 2 sind die Meßergebnisse der an Beispiel 2 durchgeführten Prüfungen aufgelistet. Gemessen wurde das Flächengewicht, die absolute und relative Wasseraufnahme nach dem Körbchentest in Anlehnung an DIN 53923, jeweils vor und nach dem Schrumpfvorgang, sowie der Schrumpfbausch (SB) und die Dicke des Materials.

Beispiel 3:

Beispiel 3 unterschied sich von Beispiel 2 lediglich dadurch, daß zwischen die beiden Faserflore F1 und F2 eine monoaxial verstreckte Folie eingebracht wurde. In Tabelle 2 sind die Meßergebnisse der an Beispiel 3 durchgeführten Prüfungen aufgelistet. Gemessen wurde das Flächengewicht, das absolute und relative Wasseraufnahme nach dem Körbchentest in Anlehnung an DIN 53923, jeweils vor und nach dem Schrumpfvorgang, sowie der Schrumpfbausch (SB) und die Dicke des Materials.

Tabelle 2

| | Beispiel 2 | Beispiel 3 |
|---|---|---|
| Faserflor F1 = S1 | 80% Viskose dtex 1,4 Schnittlänge 40mm, 20% Polypropylen / Polyethylen 20%Polypropylen/Polyethylen-Bikomponetenfaser dtex 1,7, Schnittlänge 51 mm | 80% Viskose dtex 1,4, Schnittlänge 40mm, Bikomponentenfaser dtex 1,7, Schnittlänge 51 mm |
| Zwischenlage = S2 | PP-Gittergelege, monoaxial gereckt | 15µm PPO Folie monoaxial gereckt |
| Faserflor F3 = S3 | 80% Viskose dtex 1,4 Schnittlänge 40mm, 20% Polypropylen / Polyethylen 20% Polypropylen/Polyethylen-Bikomponentenfaser dtex 1,7, Schnittlänge 51 mm | 80% Viskose dtex 1,4, Schnittlänge 40mm, Bikomponentenfaser dtex 1,7, Schnittlänge 51 mm |
| Gewicht vor dem Schrumpf | 45 g/m$^2$ | 55 g/m$^2$ |
| Gewicht nach dem Schrumpf | 94 g/m$^2$ | 124 g/m$^2$ |
| Wasseraufnahme vor dem Schrumpf | 272 g/m$^2$ | 810 g/m$^2$ |
| Wasseraufnahme nach dem Schrumpf | 1034 g/m$^2$ | 1254 g/m$^2$ |
| relative Wasseraufnahme vor dem Schrumpf | 605 % | 810 % |
| relative Wasseraufnahme nach dem Schrumpf | 1100 % | 1254 % |
| Schrumpfbausch (SB) | 185 % | 362 % |
| Dicke nach dem Schrumpf (mm) | 1,7 | 2,0 |

**Patentansprüche**

1. Dreidimensional strukturiertes Faserflächengebilde mit hoher Flüssigkeitsaufnahme von mindestens 5 g Flüssigkeit pro g Faserflächengebilde, einer Dicke von mindestens 0,8 mm und regelmäßig in Bezug auf die Flächenebene alternierend auftretenden Erhebungen und Vertiefungen umfassend mindestens eine Vliesstofflage und ein damit verbundenes geschrumpftes Flächengebilde, wobei die Verbindung zwischen der Vliesstofflage und dem geschrumpften Flächengebilde durch Verschweißen erfolgt ist, wobei das Verschweißen zumindest senkrecht zur Richtung des stärksten Schrumpfes des geschrumpften Flächengebildes in der Form von regelmäßig angeordneten Linien erfolgt ist und wobei zwischen Vliesstofflage und geschrumpftem Flächengebilde an den alternierend auftretenden Erhebungen und Vertiefungen sich Räume ausgebildet haben, welche die Flüssigkeitsaufnahme des Flächengebildes fördern.

2. Dreidimensional strukturiertes Faserflächengebilde nach Anspruch 1, **dadurch gekennzeichnet, dass** das Bindungsmuster zur Fixierung der Vliesstofflage auf dem geschrumpften Flächengebilde in der Form von regelmäßig angeordneten und nicht unterbrochenen Linien erfolgt ist.

**3.** Dreidimensional strukturiertes Faserflächengebilde nach Anspruch 1, **dadurch gekennzeichnet, dass** das Verschweißen durch Hitze und Kalanderdruck und/oder durch Ultraschall erfolgt ist.

**4.** Dreidimensional strukturiertes Faserflächengebilde nach Anspruch 1, **dadurch gekennzeichnet, dass** das geschrumpfte Flächengebilde ausgewählt wird aus der Gruppe bestehend aus Gewebe, Gewirke, Netz, Gelege, parallel verlaufenden Monfilamenten, Stapelfaser- oder Multifilamentgarnen, einem Vliesstoff oder einer Folie.

**5.** Dreidimensional strukturiertes Faserflächengebilde nach Anspruch 3, **dadurch gekennzeichnet, dass** das geschrumpfte Flächengebilde ausgewählt wird aus der Gruppe bestehend aus einem Vliesstoff oder einer Folie.

**6.** Dreidimensional strukturiertes Faserflächengebilde nach Anspruch 5, **dadurch gekennzeichnet, dass** das geschrumpfte Flächengebilde sich von einer uniaxial- oder biaxial gereckten Folie ableitet.

**7.** Dreidimensional strukturiertes Faserflächengebilde nach Anspruch 1, **dadurch gekennzeichnet, dass** dieses ein geschrumpftes Flächengebilde und zumindest einen nicht oder unter Prozeßbedingungen weniger geschrumpften Vliesstoff aufweist.

**8.** Dreidimensional strukturiertes Faserflächengebilde nach Anspruch 1, **dadurch gekennzeichnet, dass** dieses drei Lagen aufweist, von denen eine ein geschrumpftes Flächengebilde ist, das auf beiden Seiten mit einem nicht oder unter Prozeßbedingungen weniger geschrumpften Vliesstoff abgedeckt ist, wobei die abdeckenden Vliesstoffe entweder gleiche oder ungleiche Flächengewichte

**9.** Dreidimensional strukturiertes Faserflächengebilde nach Anspruch1, **dadurch gekennzeichnet, dass** die Vliesstofflage aus Stapelfasern besteht.

**10.** Dreidimensional strukturiertes Faserflächengebilde nach Anspruch 1, **dadurch gekennzeichnet, dass** dieses ein Flächengewicht von 40 bis 300 g/m$^2$ aufweist.

**11.** Dreidimensional strukturiertes Faserflächengebilde nach Anspruch 1, **dadurch gekennzeichnet, dass** der eingesetzte Vliesstoff neben Fasern aus thermoplastischen Polymeren, wie Polyolefinen und/oder Polyester, Viskosefasern oder Viscose-ähnliche Fasern, Fasern aus nachwachsenden Rohstoffen oder Abmischungen dieser Fasern aufweist.

**12.** Dreidimensional strukturiertes Faserflächengebilde nach Anspruch 1, **dadurch gekennzeichnet, dass** dieses Flüssigkeiten, insbesondere Wasser und/oder Öl-/Wasseremulsionen aufweist.

**13.** Dreidimensional strukturiertes Faserflächengebilde nach Anspruch 1, **dadurch gekennzeichnet, dass** das Muster der Verschweißung von Vliesstofflage und schrumpffähigem Flächengebilde in der Form von regelmäßig senkrecht zur und/oder in Maschinenlaufrichtung angeordneten und vorzugsweise ununterbrochenen Linien oder Balken verläuft.

**14.** Dreidimensional strukturiertes Faserflächengebilde nach Anspruch 1, **dadurch gekennzeichnet, dass** das Muster der Verschweißung von Vliesstofflage und schrumpffähigem Flächengebilde in der Form von regelmäßig auf der Oberfläche des Vliesstoffes angeordneten Linien in der Form von Hexagons verläuft.

**15.** Verfahren zur Herstellung eines dreidimensional strukturierten Faserflächen-gebildes nach Anspruch 1 umfassend die Maßnahmen:

a) Kombination von mindestens einem Faserflor und/oder Vliesstoff mit einem schrumpffähigen Flächengebilde,
b) Verschweißen zwischen dem Faserflor und/oder Vliesstoff und dem schrumpffähigen Flächengebilde in Form eines Linienmusters, das zumindest senkrecht zur Richtung des stärksten Schrumpfes des schrumpffähigen Flächengebildes verläuft,
c) Erhitzen des erhaltenen Verbundes auf eine solche Temperatur, dass der Schrumpf des schrumpffähigen Flächengebildes ausgelöst wird und sich regelmäßig in Bezug auf die Flächenebene alternierend auftretende Erhebungen und Vertiefungen ausbilden und wobei das Ausmaß des Schrumpfes so gewählt wird, dass zwischen Vliesstofflage und geschrumpftem Flächengebilde an den alternierend auftretenden Erhebungen und Vertiefungen sich Räume ausgebildet haben, welche die Flüssigkeitsaufnahme des Flächengebildes fördern und somit die Dichte des Vliesstoffes erniedrigt und dessen Volumen und Bausch erhöht wird.

16. Verwendung des dreidimensional strukturierten Faserflächengebildes nach Anspruch 1 als Wischtuch, Feuchtwischtuch oder als Flüssigkeitsspender zur Reinigung oder zum Auftrag von Flüssikeiten, wie medizinischen Substanzen oder Kosmetika.

Fig.1

Fig.2a

Fig.2b

Fig.2c

Fig.3

Fig.4a

Fig.4b

Fig.5a

Fig.5b

# Fig.6a

Fig.6b

Fig.7a

Fig.7b

Fig.8a

50

51

Fig.8b

Fig.9